Europäisches Patentamt

European Patent Office

Office européen des brevets

(11) Veröffentlichungsnummer : **0 135 655**
**B1**

(12) **EUROPÄISCHE PATENTSCHRIFT**

(45) Veröffentlichungstag der Patentschrift :
29.07.87

(21) Anmeldenummer : 84104048.8

(22) Anmeldetag : 11.04.84

(51) Int. Cl.⁴ : **B 29 C 47/08**

(54) Hydraulische Steuerung für Extruder-Spritzaggregate zum Verarbeiten von Kautschuk.

(30) Priorität : 07.06.83 DE 3320520

(43) Veröffentlichungstag der Anmeldung :
03.04.85 Patentblatt 85/14

(45) Bekanntmachung des Hinweises auf die Patenterteilung : 29.07.87 Patentblatt 87/31

(84) Benannte Vertragsstaaten :
AT FR GB IT SE

(56) Entgegenhaltungen :
DE-A- 3 027 698
DE-B- 2 417 986

(73) Patentinhaber : KLÖCKNER-WERKE AKTIENGESELL-
SCHAFT
Klöcknerstrasse 29
D-4100 Duisburg 1 (DE)

(72) Erfinder : van der Ohe, Helmcke, Dipl.-Ing.
Zedernstrasse 29
D-2807 Achim-Uesen (DE)
Erfinder : Koliwer, Wolfgang
Uesener Ring 34
D-2807 Achim (DE)

(74) Vertreter : Kiefer, Winfried, Dipl.-Phys.
Klöckner-Werke Aktiengesellschaft Patentabteilung
Klöcknerstrasse 29
D-4100 Duisburg 1 (DE)

**Beschreibung**

Die Erfindung betrifft eine hydraulische Steuerung für Extruder-Spritzaggregate zum Verarbeiten von Kautschuk, mit einer von einem Hydromotor angetriebenen Plastifiziereinheit und einer Spritzeinheit mit einem hydraulischen Arbeitszylinder dessen Kolbenstange mit dem Spritzkolben verbunden ist, und mit einer hydraulischen Pumpe für den Hydromotor und den Arbeitszylinder, die in Abhängigkeit des Spritzdrucks und/oder der Spritzgeschwindigkeit, das Nachdrucks und des Staudrucks gesteuert ist.

Eine derartige Steuerung ist bekannt. Extruder-Spritzaggregate zum Verarbeiten von Kautschuk weisen einen Extruder zum Plastifizieren des zu verarbeitenden Kautschuks auf, das unter einem vorgegebenen Staudruck erfolgt, wobei der zu plastifizierende Kautschuk sich infolge der Friktionsarbeit erwärmt. Da Kautschukmischungen, unabhängig vom Elastomer, eine bestimmte Reaktionstemperatur haben, ist darauf zu achten, daß diese Temperatur nicht überschritten wird.

In der Praxis ist man bestrebt, die Massetemperatur nahe der Vulkanisationstemperatur zu halten, um so kurze Heizzyklen zu erzielen.

Erfahrungsgemäß bedeutet eine Temperaturerhöhung oder eine Verminderung von 10 Grad C in der Kautschukmasse, eine Verkürzung oder eine Verlängerung der Vulkanisationszeit um 50 %. Daraus ergibt sich eine unbedingte Forderung, beim Plastifizieren die Temperatur der Masse konstant zu halten, damit definierte Verarbeitungsbedingungen erreicht werden. Der plastifizierte Kautschuk wird anschließend unter vorgegebenem Spritzdruck und Nachdruck in die Form eingespritzt und vulkanisiert.

Im allgemeinen ist es üblich, daß der Extruder den plastifizierten Kautschuk in einen Spritzzylinder fördert, aus dem er mittels eines Spritzkolbens in die Form gespritzt wird.

Das Extruder-Spritzaggregat ist in manchen Fällen so ausgelegt, daß eine Schnecke sowohl die Funktion des Plastifizierens als auch die Funktion des Spritzens übernimmt.

Die im Folgenden erläuterten Probleme sind bei allen Extruder-Spritzaggregaten gleich, so daß die Erfindung bei allen Extruder-Spritzaggregaten anwendbar ist.

Während die Vorgabe und Einhaltung des Spritzdrucks und Nachdrucks unproblematisch ist, ergeben sich beim Staudruck Probleme : Infolge der gegenläufigen axialen Verschiebung des Spritzkolbens bzw. der Schnecke in der Staudruckphase zu der in der Spritz- und Nachdruckphase gelangt plastifiziertes Kautschukmaterial in den von der Schnecke bzw. dem Spritzkolben und der Innenwandung des Spritzzylinders begrenzten Ringspalt, das während der Spritz- und Nachdruckphase ausvulkanisiert. Beim anschließenden Plastifizieren von weiterem Kautschuk ergeben sich undefinierte Betriebszustände, da bis zum Reißen des ausvulkanisierten Films in dem Ringspalt zwangsläufig der Druck auf das zu plastifizierende Kautschukmaterial ansteigt und folglich unter einem nicht exakt vorgegebenen Staudruck die Staudruckphase abläuft. Zwangsläufig erhöht sich mit steigendem Druck die Friktionsarbeit und damit die Temperatur des plastifizierten Kautschuks, so daß in ungünstigen Fällen das Ausvulkanisieren bereits vorzeitig beginnt.

Zusätzliche Verwicklungen ergeben sich dadurch, daß nach jedem Spritzzyklus, d. h. nach dem Beendigen der Nachdruckphase der gebildete ausvulkanisierte Film in dem Ringspalt hinsichtlich seiner Abmessungen und Eigenschaft nicht identisch ist mit denjenigen der vorausgehenden und nachfolgenden Spritzzyklen, was zum Teil auf die wenn auch stets sich geringfügig ändernden Betriebstemperaturen des Extruder-Spritzaggregats zurückzuführen ist. Dies hat zur Folge, daß bei Vorgabe eines konstanten Druckes über mehrere Zyklen, der im Extruder sich tatsächlich einstellende Staudruck im allgemeinen eine sich ändernde Größe ist.

Diese verwickelten Zusammenhänge setzten bisher voraus, daß das Bedienungspersonal eine erhebliche Erfahrung aufweisen mußte, um diese Vorgänge im Griff zu haben.

Der Erfindung liegt die Aufgabe zugrunde, eine hydraulische Steuerung der eingangs erwähnten Art zu schaffen, die diesen sich ändernden Einflüssen durch die ausvulkanisierten Filme im Ringspalt Rechnung trägt, so daß die Staudruckphase unter einem konstanten vorgebbaren Staudruck abläuft.

Diese Aufgabe wird erfindungsgemäß gelöst durch einen Meßwertaufnehmer für die Stellung der Kolbenstange des Arbeitszylinders bzw. des Spritzkolbens, ein der zum Druckraum des Arbeitszylinders für den Kolbenrückzug führenden Leitung aufschaltbares Druckregelventil, ein der zum Druckraum des Arbeitszylinders für den Kolbenvorschub führenden Leitung aufschaltbares proportional gesteuertes Druckventil, eine Einrichtung zum Steuern des proportional gesteuerten Druckventils in Abhängigkeit von abfallenden Steuerwerten und eine Einrichtung die bei der erstmaligen Änderung des Ausgangssignals am Meßwertaufnehmer zu Beginn jeder Standruckphase den Momentanwert des Druckes im Druckraum zu dem vorgewählten Staudruck als Korrekturgröße addiert.

Nach Beendigung der Nachdruckphase geht das aufschaltbare Druckregelventil in die Arbeitsstellung und stellt die Verbindung des anderen Druckraumes des Arbeitszylinders mit der Druckanschlußleitung her. Hierbei ist ein hinreichend großer Maximaldruck eingestellt. Gleichzeitig ist der Druckraum des Arbeitszylinders mit der Ablaufanschlußleitung verbunden, wobei der Druck durch den eingestellten Druck am proportional gesteuerten Druckventil vorgegeben ist, das von seiner Steuereinrichtung im Sinne abfallender Steuerwerte gesteuert ist. Bei einem von dem ausvulkanisierten Film abhängigen Differenzdruck in beiden Druckräumen des Arbeitszylinders verschiebt sich der Kolben mit der Kolbenstange. Gleichzeitig ändert sich das Ausgangssignal des Meßwertaufnehmers, das der Einrichtung zugeführt wird. Die bei Änderung dieses Signals anstehende Druckdifferenz führt dazu, daß die Einrichtung diese Druckdifferenz als Korrekturwert zu dem vorgegebenen Staudruck addiert.

Dies hat zur Folge, daß das vom Extruder plastifizierte Kautschukmaterial unter einem definierten Staudruck plastifiziert wird.

Im einzelnen ergeben sich folgende Abläufe :

Zu Beginn der Staudruckphase steuert die Steuereinrichtung das proportional gesteuerte Druckventil im Sinne abfallender Druckwerte. Bei einer bestimmten von dem ausvulkanisierten Film abhängigen Druckdifferenz auf beiden Seiten des Kolbens des Arbeitszylinders setzt sich der Kolben in Bewegung. Diese Druckdifferenz ist der Korrekturwert. Er wird zu dem hydraulischen Druck addiert unter dem das hydraulische Arbeitsmittel in dem anderen Druckraum steht. Dieser korrigierte Druck ist gewissermaßen der korrigierte hydraulische Staudruck. Daraus ergibt sich durch Multiplikation mit dem Übersetzungsverhältnis der beiden Kolbenflächen des Kolbens des Spritzzylinders der Staudruck des plastifizierten Materials.

Die Erfindung ist in der Zeichnung anhand eines Ausführungsbeispiels erläutert. Es zeigen :

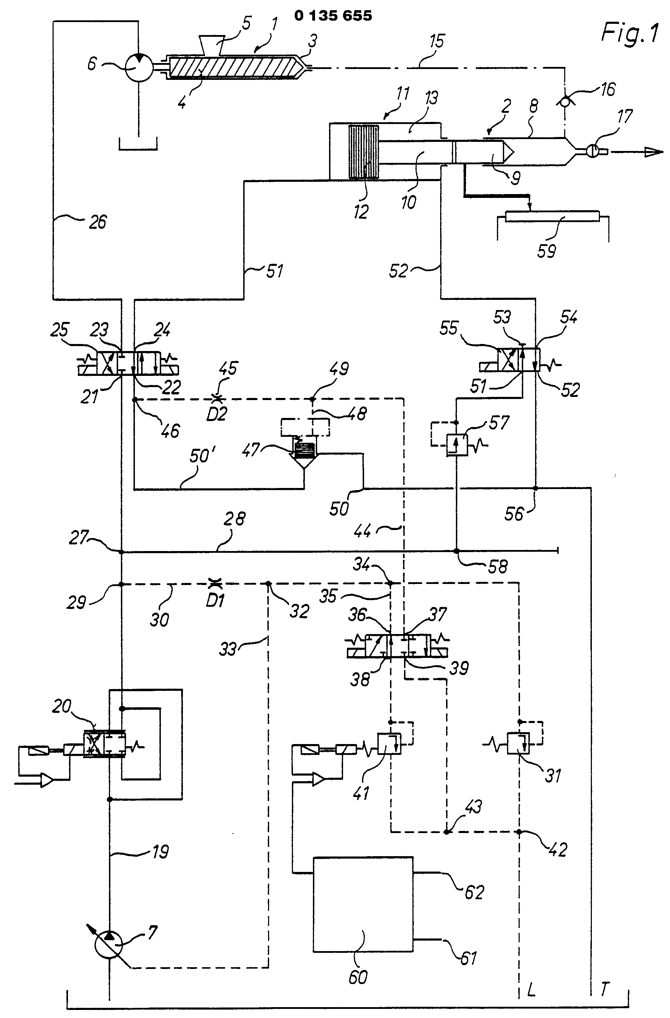

Figur 1  das Ausführungsbeispiel für ein Extruder-Spritzaggregat, mit einem Extruder und einer Spritzeinheit

Figur 2  das Ausführungsbeispiel der Fig. 1, mit der Schaltstellung der Ventile zur Bestimmung des Korrekturwertes zu Beginn der Staudruckphase.

Das Extruder-Spritzaggregat besteht aus der Plastifiziereinheit 1 und der Spritzeinheit 2. Die Plastifiziereinheit weist eine in einem Zylinder 3 drehbar gelagerte Schnecke 4 auf, dem über einem Trichter 5 das zu plastifizierende Kautschukmaterial zugeführt wird. Die Schnecke wird von einem Hydromotor 6 angetrieben, der von einer gesteuerten Pumpe 7 beaufschlagt wird. Diese gesteuerte Pumpe 7 ist in Abhängigkeit des Spritzdrucks, Nachdrucks gesteuert.

Die Spritzeinheit 2 weist einen Spritzzylinder 8 mit einem darin axial verschieblich geführten Spritzkolben 9 auf. Dieser Spritzkolben ist mit der Kolbenstange 10 des Arbeitszylinders 11 gekoppelt, dessen Kolben 12 mit dem Arbeitszylinder die Druckräume 13 und 14 begrenzt. Der Spritzzylinder steht über eine Leitung 15, in der ein Rückschlagventil 16 angeordnet ist mit dem Extruder in Verbindung. Der Spritzzylinder weist weiterhin ein Sperrventil 17 auf. Während des Plastifizierens des Kautschukmaterials wird von der drehenden Schnecke plastifiziertes Material bei geöffnetem Rückschlagventil 16 und geschlossenem Sperrventil 17 das Material in den Spritzzylinder gefördert, wobei der Spritzkolben sich in der Zeichnung auf seine linke Endstellung zu bewegt. Mit Beendigung der Staudruckphase wird das Ventil 17 geöffnet und in Pfeilrichtung das plastifizierte Kautschukmaterial in die nicht dargestellte Form gespritzt, wobei das Rückschlagventil 16 durch den sich aufbauenden Spritzdruck geschlossen wird.

Von der gesteuerten Pumpe 7 führt eine Leitung 19 über ein Proportionalventil 20 zu dem Zufluß 21 eines 4/3-Wegeventils 25. Dessen ersten Abfluß 23 führt über eine Leitung 26 zu dem Hydromotor 6. In der Leitung 19 ist an den Abzweig 27 zwischen dem Proportionalventil 20 und dem 4/3-Wegeventil 25 die Druckanschlußleitung 28 angeschlossen.

Zwischen dem Proportionalventil 20 und dem Abzweig 27 ist in der Leitung 19 ein weiterer Abzweig 29 für eine Steuerleitung 30 vorgesehen, die über ein Druckbegrenzungsventil 31 zum Tank T führt. Zwischen dem Abzweig 29 und dem Druckbegrenzungsventil 31 führt von einem Abzweig 32 die Steuerleitung 33 zur gesteuerten Pumpe 7. Zwischen diesem Abzweig 32 und dem Druck begrenzungs ventil ist ein weiterer Abzweig 34 vorgesehen, der über eine Leitung 35 mit dem ersten Zufluß 36 des 4/3-Wegeventils 40 verbunden ist. Der erste Abfluß 38 dieses 4/3-Wegeventils ist mit dem Zufluß eines proportional gesteuerten Druckventils 41 verbunden, dessen Abfluß mit dem Abzweig 42 in der Leitung 30 zwischen dem Druckbegrenzungsventil 31 und dem Tank verbunden ist. In der Leitung zwischen dem proportional gesteuerten Druckventil 41 und dem Abzweig 42 ist ein Abzweig 43 vorgesehen, der mit dem zweiten Abfluß 39 des 4/3-Wegeventils 40 verbunden ist. Der zweite Zufluß 37 dieses 4/3-Wegeventils führt über eine Leitung 44 und eine Drossel 45 zu dem dritten Abfluß 22 des 4/3-Wegeventils 25. Zwischen dem Abfluß 22 und der Drossel 45 ist ein Abzweig 46 angeordnet, der über die Leitung 50' zu dem Druckbegrenzungsventil 47 führt, dessen Steuerleitung 48 mit dem Abzweig 49 zwischen der Drossel 45 und dem Zufluß 37 in der Leitung 44 verbunden ist. Die Abflußleitung 50 dieses Druckbegrenzungsventils führt zum Tank.

Der zweite Abfluß 24 des 4/3-Wegeventils 25 ist über eine Leitung 51 mit dem Druckraum 14 des Arbeitszylinders 11 verbunden.

Der Druckraum 13 des Arbeitszylinders für den Kolbenrückzug ist über eine Leitung 52 mit dem zweiten Abfluß 54 eines 4/2-Wegeventils 55 verbunden, dessen erster Abfluß 53 gesperrt ist. Der dritte Abfluß 52 dieses 4/2-Wegeventils ist mit dem Abzweig 56 in der Abflußleitung 50 des Druckbegrenzungsventils 47 verbunden.

Der Zufluß 51 des 4/2-Wegeventils 55 ist über ein Druckregelventil 57 mit dem Abzweig 58 in der Druckanschlußleitung 28 verbunden.

Der Spritzkolben 9 bzw. die Kolbenstange 10 ist mit einem Wegmeßsystem 59 gekoppelt, das beispielsweise ein absoluter Winkelschrittgeber sein kann, das über eine Zahnstange mit dem Spritzkolben bzw. der Kolbenstange gekoppelt ist.

Die Einrichtung zum Steuern des proportional gesteuerten Druckventils 41 ist mit 60 bezeichnet, in der eine Druckkurve gespeichert ist, gemäß der entsprechend einer vorgegebenen Zeitfunktion der Vorsteuerdruck sich ändert. Der Ausgang des Meßwertaufnehmersystems 59 ist mit einem Eingang 61 des Steuerteiles 60 verbunden. Dieses Steuerteil 60 weist weiterhin eine Eingabe 62 für den Sollwert des Staudruckes auf.

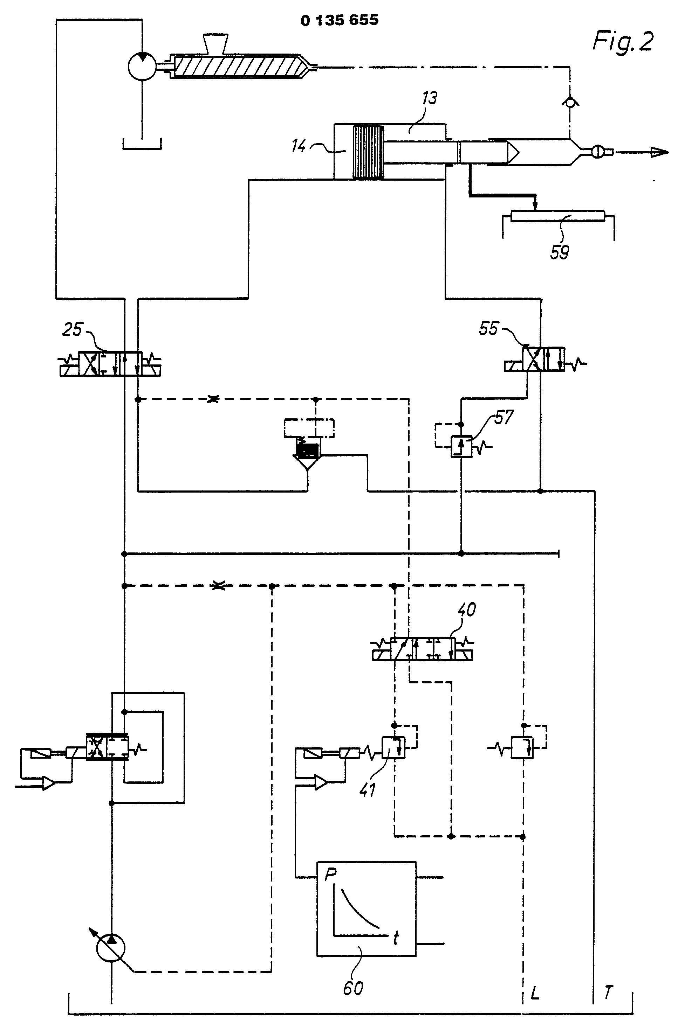

Fig. 2 zeigt die Stellung der Ventile zur Ermittlung des Korrekturwertes für den Staudruck zu Beginn der Staudruckphase.

Durch die Schaltstellung des 4/2-Wegeventils 55 und den eingestellten Druck am Druckregelventil 57 herrscht im Druckraum 13 ein vorgegebener definierter Druck. Durch die Schaltstellung des 4/3-Wegeventils 25, des 4/3-Wegeventils 40 und durch die Vorgabe eines maximalen Anfangswertes für den Druck am proportional gesteuerten Druckventil 41 herrscht im Druckraum 14 zunächst der dem Flächenverhältnis entsprechende Druck. Die Drücke in den Druckräumen 13 und 14 sind damit so vorgegeben, daß der Arbeitskolben 12 in Ruhe ist. Anschließend wird der Steuerdruck am vorgesteuerten Druckgrenzungsventil laufend erniedrigt bis der Kolben eine axiale Bewegung auszuführen beginnt. Hierdurch ändert sich das Ausgangssignal am Meßwertaufnehmer 59. Dies hat zur Folge, daß die Einrichtung 60 den registrierten Momentanwert des Druckes im Druckraum 14 erfaßt und als Korrekturwert zu dem als Sollwert vorgegebenen Staudruck addiert. Die Staudruckphase läuft dann unter dem korrigierten Staudruck ab. Die Bestimmung des Korrekturwertes erfolgt zu Beginn einer jeden Staudruckphase.

## Patentanspruch

Hydraulische Steuerung für Extruder-Spritzaggregate zum Verarbeiten von Kautschuk, mit einer von einem Hydromotor (6) angetriebenen Plastifiziereinheit (1) und einer Spritzeinheit (2) mit einem hydraulischen Arbeitszylinder (11), dessen Kolbenstange (10) mit dem Spritzkolben (9) verbunden ist, und mit einer hydraulischen Pumpe (7) für den Hydromotor (6) und den Arbeitszylinder (11), die in Abhängigkeit des Spritzdrucks und/oder der Spritzgeschwindigkeit, des Nachdrucks und des Staudrucks gesteuert ist, gekennzeichnet durch einen Meßwertaufnehmer (59) für die Stellung der Kolbenstange (10) des Arbeitszylinders (11) bzw. des Spritzkolbens (9), ein der zum Druckraum (13) des Arbeitszylinders für den Kolbenrückzug führenden Leitung aufschaltbares Druckregelventil (57), ein der zum Druckraum (14) des Arbeitszylinders für den Kolbenvorschub führenden Leitung aufschaltbares proportional gesteuertes Druckventil (41), eine Einrichtung zum Steuern des proportional gesteuerten Druckventils (41) in Abhängigkeit von abfallenden Steuerwerten und eine Einrichtung, die bei der erstmaligen Änderung des Ausgangssignals am Meßwertaufnehmer (59) zu Beginn jeder Staudruckphase den Momentanwert des Druckes im Druckraum (14) zu dem vorgewählten Staudruck als Korrekturwert addiert.

## Claim

Hydraulic control for extruder-injecting units for processing rubber, having a plasticising unit (1) driven by a hydraulic motor (6), an injecting unit (2) having a hydraulic working cylinder (11), the piston rod (10) of which is connected to the injecting piston (9), and having a hydraulic pump (7) for the hydraulic motor (6) and the working cylinder (11) which is controlled in dependence on the injecting pressure and/or the injecting speed, the dwell pressure and the dynamic pressure, characterised by a transducer (59) for the position of the piston rod (10) of the working cylinder (11) or the injecting piston (9), a pressure-regulating valve (57) that can be switched to the line leading to the pressure chamber (13) of the working cylinder for the piston return, a proportionally controlled pressure-regulating valve (41) that can be switched to the line leading to the pressure chamber (14) of the working cylinder for the piston advance, a device for controlling the proportionally controlled pressure-regulating valve (41) in dependence on falling control values and a device which, during the first change of the output signal at the transducer (59) at the beginning of each dynamic pressure phase, adds the actual value of the pressure in the pressure chamber (14) to the preselected dynamic pressure as a correction value.

## Revendication

Commande hydraulique de groupes d'extrusion injection pour le traitement du caoutchouc, avec une unité de plastification (1) entraînée par un moteur hydraulique (6), une unité d'injection (2) équipée d'un vérin hydraulique (11) dont la tige de piston (10) est reliée au piston d'injection (9), et une pompe hydraulique (7) pour le moteur hydraulique (6) et le vérin hydraulique (11), qui est commandée en fonction de la pression d'injection et/ou de la vitesse d'injection, du maintien en pression et de la contre-pression, caractérisée en ce qu'elle comporte un transducteur (59) pour la position de la tige de piston (10) du vérin hydraulique (11) voire du piston d'injection (9), une soupape de régulation de pression (57) pouvant être insérée dans la conduite menant à la chambre de compression (13) du vérin hydraulique pour le retrait du piston, une soupape de refoulement (41) à commande proportionnelle pouvant être insérée dans la conduite menant à la chambre de compression (14) du vérin hydraulique pour l'avance du piston, un dispositif pour le pilotage de la soupape (41) à commande proportionnelle en fonction de valeurs de commande décroissantes, et un dispositif qui, lors de la première variation du signal de sortie du transducteur (59), ajoute à la contre-pression présélectionnée, au début de chaque phase de contre-pression, la valeur momentanée de la pression à l'intérieur de la chambre de compression (14) en tant que valeur de correction.

Fig.1

0 135 655

0 135 655

Fig.2